# EUROPEAN PATENT SPECIFICATION

(11) **EP 1 634 001 B1**
(45) Date of publication and mention of the grant of the patent: **01.05.2013**
(21) Application number: 04736826.1
(22) Date of filing: 14.06.2004
(51) Int. Cl.: F16J 15/00, F16J 15/16, F16J 15/54

(54) **PRESSURE RESISTANT STATIC AND DYNAMIC EXPELLER SHAFT SEALING**
DRUCKFESTE STATISCHE UND DYNAMISCHE GEGENLÄUFERWELLENDICHTUNG
JOINT D'ETANCHEITE D'ARBRE EXPULSEUR, A TRAVAIL STATIQUE ET DYNAMIQUE ET RESISTANT A LA PRESSION

(30) Priority: 16.06.2003 SE 0301749; 20.06.2003 US 479870 P
(43) Date of publication of application: 15.03.2006
(73) Proprietor: Huhnseal AB, 261 23 Landskrona (SE)
(72) Inventor: ANDERBERG, Göran, S-261 61 Landskrona (SE)
(74) Representative: KIPA AB
(86) International application number: PCT/SE2004/000924
(87) International publication number: WO 2004/111504

(56) References cited:
- WO-A1-03/025436
- US-A- 3 042 417
- US-A- 3 256 027
- US-A- 4 428 587
- US-A- 5 221 095

## Description

### Field of the Invention

This invention pertains in general to the field of shaft sealing devices, and more particularly to a static and dynamic shaft sealing arrangement, and even more particularly to an expeller shaft sealing, which effectively seals statically when a shaft is at rest and which effectively seals dynamically when the shaft is rotating, as well as during transitions between static and dynamic operation, wherein a sealing arrangement changes configuration so as to seal effectively statically by means of a mechanical contact at a sealing surface and without friction when the shaft is rotating, and whereby the sealing arrangement provides a good sealing effect even for a differential pressure in the surrounding media, such as liquid, gas or dust, between both sides of the sealing arrangement both in static and dynamic operation.

### Background of the Invention

Today, lip seals are mainly used for isolating bearings in rotating equipment. The seals and bearings account for a large number of rotating equipment failures and there is a close relationship between the life of these two critical components. The failure of such a seal may cause the bearings to fail and poor bearing conditions can reduce seal life. Rain, product leakage, debris, and wash-down water entering the bearing housing contaminate the bearing lubricant and have a devastating effect on the product lifetime of the bearing. Very small amounts of water or other contaminants can shorten bearing life considerably.

Auxiliary mechanical equipment shaft sealing devices, sometimes called bearing isolators or sealing rings, are used for equipment, which is intended to operate in hostile applications, in which the equipment is exposed to potential contaminants as dust for instance. Elastomeric shaft seals thus quickly wear out and fail in such hostile environments. Dust and other exterior contaminants cannot be excluded from the interior of a sealed housing by a failed standard sealing device. Oil or other fluids can neither be prevented from leaking out of the transmission devices past a worn lip seal. To prevent the ingress of contaminants and the egress of lubricating fluids, is neither possible when a differential pressure exists in the sealing devices' surrounding media, such as liquids, gas or dust, between both sides of the sealing device. Both in static and dynamic operation, a differential pressure contributes to a leakage of the known seals and supports the transport of contaminants over the barrier of the seals.

An example for a static and dynamic shaft seal assembly is disclosed in US-A-5,221,095, wherein a solid, circumferentially stretchable annular seal member is mounted on a rotor female surface and engages a stator male surface when the rotor and seal member are at rest. The deformable sealing member is stretched circumferentially in radial direction by centrifugal force out of engagement with the stator when the rotor and seal member are moving at operating speeds, thus eliminating friction of the seal member.

However, although the seal assembly offers protection against rain, product leakage, debris, and wash-down water entering the bearing housing, the disclosed seal assembly does not seal when a pressure difference exists over the shaft seal assembly. The pressure difference may be caused by e.g. a pump effect on the bearing side or by an over-pressure on the exterior side. For instance, such an over-pressure on the exterior side of the sealing assembly is caused e.g. by cleaning equipment such as high-pressure wash appliances, or if the housing is positioned under water an increased exterior pressure is caused by the column of water existing above the housing. The differential pressure may also be generated by temperature variations, e.g. caused by exposure to heat from the sun during the day and cooling during the night, or by heat generated inside the housing by e.g. friction or power dissipation of driving devices. When heated, fluid inside the housing expands and an increased pressure results and vice versa. Such differential pressures cause the known sealing members to be lifted away and to loosen out of mechanical contact with the adjacent sealing surface, which results in a loss of sealing giving way to a passage for contaminants to e.g. a bearing and thus shortening of the product life of the equipment comprising the sealed shaft.

Moreover, the seal assembly disclosed in US-5,221,095 is difficult to assemble as the elastic sealing member has to be positioned against its contracting elasticity into the sealing assembly.

Another shaft sealing assembly is disclosed in CH-369329 and US3042417, wherein an O-ring statically seals a shaft. The O-ring is located in a rotor recess having coaxial walls with a certain inclination angle relative to a radially oriented stator. In this way, the O-ring is by means of its elasticity pressed against a radial stator surface and a sealing effect is achieved. On rotation of the shaft, the O-ring is caused to circumferentially expand due to the centrifugal force experienced. By means of one of the inclined circumferential walls, the O-ring travels further axially and radially away from the stator. Thus contact friction of the O-ring is eliminated upon rotation of the shaft. This shaft seal assembly is easier to assemble than the previously described assembly disclosed in US-A-5,221,095. However, this shaft sealing assembly does similarly suffer from the disadvantage that the sealing assembly does not seal when a differential pressure exists in the surrounding media on the two sides of the shaft seal assembly.

Thus, the problem to be solved is to provide a new shaft seal assembly insensitive to differential pressures in the media on both sides of the sealing assembly, ensuring protection against ingress of contaminants and egress of lubricants, both in static and dynamic mode of operation.

Another problem to be solved by the invention is to provide a machinery seal of the type described above, in which a solid sealing member engages both a seal stator and a seal rotor when the shaft is at rest, and in which the sealing member expands away from the stator when the shaft rotates.

Still another problem to be solved by the invention is to provide a seal of the type described above, which provides easy assembly, manufacture and a long product life cycle.

Yet a further problem to be solved by the present invention is to provide a sealing for rotating shafts with large diameters up to approximately 3 m, such as approximately 1 m. Shafts with such large diameters requiring effective static and dynamic sealing are for instance used in water driven turbines in hydro power plants or in propeller shaft sealings of vessels.

Furthermore, the person skilled in the art will be able to identify further problems associated with the prior art, which are not explicitly stated in the text of this application, but which are solved by the present invention.

### Summary of the Invention

The present invention overcomes the above-identified deficiencies in the art and solves at least the above-identified problems singly or in any combination by providing a shaft sealing assembly according to the appended patent claims.

The general solution according to the invention is provided by an axial sealing assembly for static and dynamic sealing, preferably of an axial bearing. The assembly comprises at least one first resilient elastic sealing member, a centrally located rotating movable shaft, a rotor attached to said shaft, and a stator attached to a housing. The sealing member is arranged in such a manner that a pressure difference applied over the axial sealing assembly does not degrade sealing performance of said sealing member when sealing statically. The sealing member is located in an annular recess of the rotor and the assembly has the following operating modes: a static operating mode, wherein the central shaft and thus the whole sealing assembly is at rest, and a dynamic operation mode, wherein the shaft is rotating at an operating speed, as well as transitions between the two previous operating modes when the shaft accelerates from rest or vice versa. In the static operating mode, the resilient elastic sealing member is effectively sealing one side of the assembly from its other side when a pressure difference is existing in the media present on the two sides, wherein the sealing effect is supported by the pressure difference, i.e. the pressure e.g. pushes the sealing member into its sealing surfaces. In the dynamic operating mode, the sealing is effected by a pressure difference caused by a turbine effect of the expeller member(s). When transiting from static to dynamic operation, the static sealing member is centrifugally moved axially and radially away out of its static sealing position into another position out of contact with the stator by centrifugal force and an underpressure generated by the expeller sucking the elastic sealing member from the sealing surfaces. Thus friction between the sealing member and the stator is eliminated during rotation of the shaft. During the transition from rest to rotation of the shaft, the sealing is not allowed to leak. This is achieved by an appropriate construction of the elements of the shaft sealing assembly. For instance it is ensured that the pump effect of the expeller does provide a sufficiently high pressure with relation to the pressure in the surrounding media, such that sealing is ensured at all times.

The present invention has a number of advantages over the prior art. Namely, the present invention has the advantage that it provides an easily assembled and manufactured sealing assembly which effectively ensures static and dynamic sealing with a differential pressure present between the two sides sealed from each other, without degrading sealing performance, even at large shaft diameters.

### Brief Description of the Drawings

Further objects, features and advantages of the invention will become apparent from the following description of embodiments of the present invention, reference being made to the accompanying drawings, in which
Fig. 1 is a partly cut-out perspective view of an embodiment of a shaft sealing assembly for static and dynamic sealing of a shaft;
Fig. 2 is a frontal planar view showing the axial sealing assembly of Fig. 1 in a housing;
Fig. 3 is a cross sectional view along line A-A shown in Fig. 2, illustrating the axial sealing assembly of Fig. 1 built in a housing and with a shaft;
Fig. 4 is an enlarged cross sectional view of the embodiment of Fig. 1, illustrating static and dynamic sealing of the axial sealing assembly;
Fig. 5 is a planar view showing a friction coupling member of the embodiment as shown in Fig. 1;
Fig. 6 is a perspective view showing the friction coupling of Fig. 5;
Fig. 7 is a sectional view showing a shaft, a rotor and the friction coupling element of Figs. 5 and 6 interposed between the shaft and the rotor, wherein the friction coupling element is in rest;
Fig. 8 is a sectional view similar to Fig. 7, wherein the friction coupling element is clamped up;
Fig. 9 is a planar view showing the friction coupling of Fig. 5 in its assembled and wedged up position;
Fig. 10 is a sectional view showing a fluid channel in the sealing assembly for fluid distribution; and
Fig. 11 is a schematic sectional view illustrating a bearing box with two shaft sealings according to the embodiment of Fig. 1 and one shaft sealing as an oil mister.

### Description of embodiments

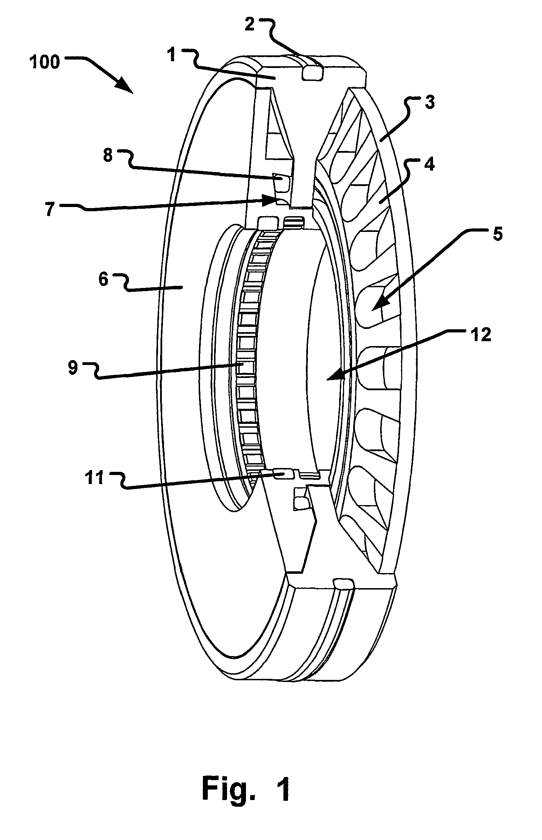

An exemplary embodiment of the invention is shown in the Figures 1 to 4 in order to illustrate the present invention. However, the invention is not limited to this specific embodiment and is only limited by the appended patent claims.

Fig. 1 shows an embodiment 100 of an axial shaft sealing assembly for static and dynamic sealing of a shaft. The axial sealing assembly comprises a stator member 1, a sealing member 2 sealing the stator member against a surrounding housing, a first expeller rotor member 3 comprising expeller protrusions 4 and in-between lying expeller recesses 5, a second expeller rotor member 6 having an annular recess 7 enclosing an annular sealing member 8, a friction coupling member 9 rotationally locking the axial sealing assembly towards a central shaft, a sealing member 11 sealing along the shaft in longitudinal direction, and a central interior 12 for receiving a rotatably movable shaft mounted in at least one bearing inside the housing. The two expeller rotor members 3, 6 are assembled by means of a press fitting. The rotor and the stator do not physically engage one another and a slit between the stator and the rotor is left open. This slit is a passage from one side of the sealing assembly to the other side. In order to seal off this passage, partly the sealing member 8 is used in rest and partly a centrifugal pumping effect is used in motion of the shaft.

In dynamic operation, as described in more detail below, expeller rotor members 3, 6 generate a pressure difference in the slit passage upon rotation of the shaft and the expeller rotor members 3,6. The pressure difference is generated by centrifugal forces expelling any loose material or medium, such as loose particles, liquids, gases, dust, etc. inside the slit and out of the slit. This is caused by the rotational movement of the expeller rotor members in connection with the wing-like shape of the expeller protrusions and recesses, whereby any material having entered the slit is exposed to a expeller pumping pressure caused by centrifugal forces slinging the material back and expelling it out of the same slit. The expeller rotor wings 3, 6 comprising expeller protrusions 4 and in-between lying expeller recesses 5, are appropriately shaped in order to create a pressure sufficient to resist the highest differential pressure, which may be expected during operation of the sealing assembly 100 between the two sides of the assembly 100. By shaping the wings appropriately, the pressure is balanced, i.e. the pressure generated by the turbine effect of the rotating wings compensates for the pressure outside of the sealing assembly by "pumping back" the external pressure, thus ensuring effective sealing at all operating conditions.

The assembly has the following operating modes: a static operating mode, wherein the central shaft and thus the whole sealing assembly 100 is at rest, a dynamic operation mode, wherein the shaft is rotating at an operating speed, as well as transitions between the two previous operating modes when the shaft accelerates from rest or vice versa. In the static operating mode, the sealing member 8 is effectively sealing one side of the assembly 100 from its other side. In the dynamic operating mode, the sealing is effected by a pressure difference caused by a turbine effect of the expeller members. The static sealing member is centrifugally moved axially and radially away out of its static sealing position into another position out of contact with the stator. Thus friction between the sealing member and the stator is eliminated during rotation of the shaft.

In the dynamic operation mode, when the shaft and the expeller rotor members 3,6 are rotating, any material entering into the passage opened by the static sealing member 8, is expelled out immediately by the expeller centrifugal pumping effect, as described above. Thus also material, contaminants etc., which have entered the slit during a static sealing period and which have accumulated in the slit passage, e.g. in the expeller recesses, are expelled during the transition from static to dynamic sealing operation. Any material entering the slit during dynamic sealing operation will be expelled immediately. The longer the material enters the slit, the higher the centrifugal force will be for expelling the material back out of the same slit and out of the assembly 100 on the respective side of the assembly.

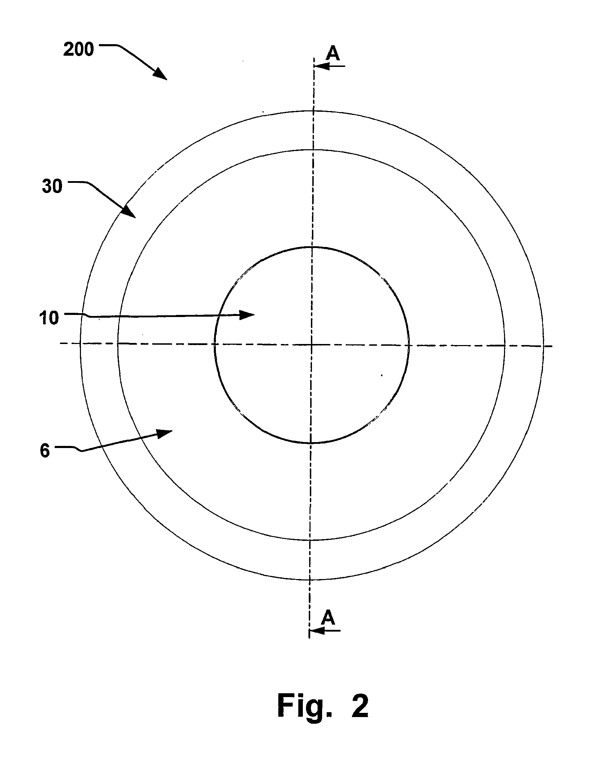

In the frontal planar view of Fig.2, an assembly 200 of the axial sealing assembly 100 of Fig. 1 is shown arranged in a housing 30. The parts of the axial sealing assembly 200 visible in Fig. 2 are the housing 30 partly overlapping the expeller member 6 and a central shaft 10.

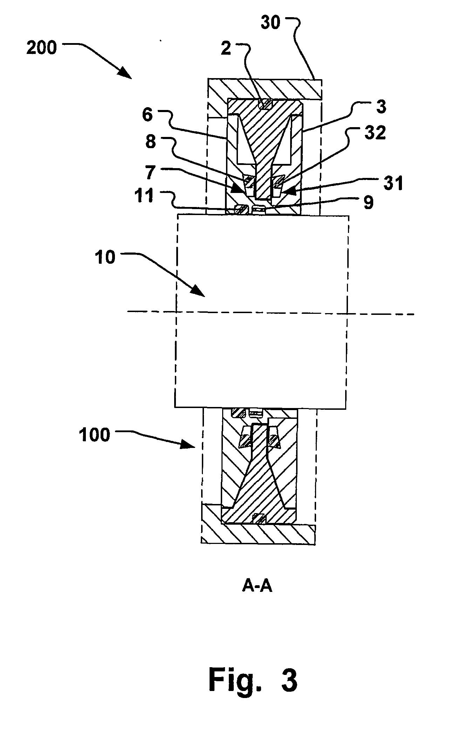

Fig. 3 is a cross sectional view taken along line A-A shown in Fig. 2, illustrating the axial sealing assembly 100 of Fig. 1 built in a housing 30 and with a shaft 10. Furthermore a recess 31 in first expeller rotor member 3 enclosing a further annular sealing member 32 are shown.

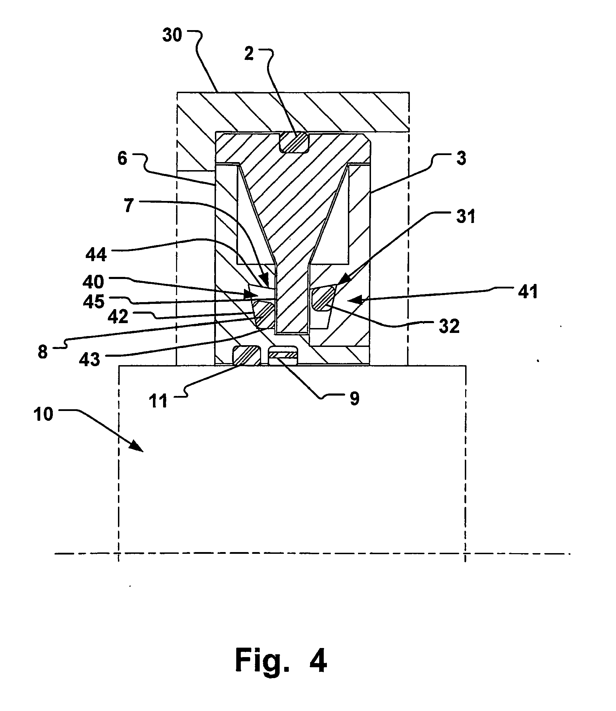

Fig. 4 is an enlarged cross sectional view of the embodiment of Fig. 1, illustrating static and dynamic sealing of the axial sealing assembly. An arrow 41 indicates the dynamic sealing operation mode, wherein the annular sealing member 32 is drawn into the radially outward position of recess 31 out of contact with the stator 1 by centrifugal force of the assembly rotating at operational speed of the shaft 10. An arrow 40 indicates the static sealing operating mode, wherein the annular sealing member 8 is shown in the radially inward position of recess 7. The sealing member 8 is drawn into this position by the elastic force of sealing member 8. The recess 7 comprises a first radially inclined recess surface 42 bridging a second axially oriented radially inward positioned recess surface 43 and a third axially inclined oriented radially outward positioned recess surface 44. Surface 42 is inclined radially away from the radially oriented surface 45 of the stator 1 from its axially inward end to the axially outward end, as shown in e.g. Fig. 4.

Sealing member 8 does not only seal by its elastic force, moreover, a pressure difference between the exterior (on the left in Fig. 4) and the interior (on the right in Fig.4) influences the sealing effectiveness of sealing member 8. The higher the pressure applied on the exterior side, the better sealing effect is achieved in the static operation mode, as the pressure presses the sealing member 8 axially downwards and thus towards both the inner axial surface 43 and the lower part of the inclined radial surface 42 of the annular recess 7 in rotor member 6 as well as against the radial surface 45 of the stator 1 adjacently facing recess 7.

Respectively the same is valid for sealing member 32, in case a higher pressure is applied on the interior side.

The recess 7 in the rotor 6 is shaped in such a manner that a pressure difference over the seal assembly in the static operation mode improves sealing of the sealing member 8. This is due to the fact that the sealing member 8 is supported by the pressure, i.e. the pressure actively presses the sealing member into the sealing contact surfaces. The physical seal engagement occurs also between the sealing member 8 and the stator 1 along the radially extending surface of the stator 1.

During the transition from static to dynamic sealing, sealing member 8 is moved from the radially inward static position as indicated by arrow 40 to the radially outward position as indicated by arrow 41. The movement is caused both by centrifugal force and by a pressure difference caused by the rotating expeller accomplishing a pumping effect, which sucks the sealing member 8 radially outwards.

Thus it is ensured that sealing member 8 effectively seals statically when the shaft 10 is at rest. Furthermore the sealing assembly effectively seals dynamically when the shaft is rotating at an operating speed due to the pressure difference caused by expeller wheels 3 and 6. Friction is eliminated in the dynamic operation mode because the sealing member moves out of contact with the stator, as explained above. Furthermore, the static and dynamic sealing is effective at pressure differences over the sealing arrangement.

In the embodiment discussed, the inclined radial surface 42 of the annular recess 7 in rotor member 6 has an inclination angle of approximately between 10° and 20°, and preferably of approximately 12°. However, also inclination angles of more than 20° may be used without departing from the present invention, as defined by the appended patent claims.

The cross sectional shape of annular sealing member 8 may be circular, i.e. annular sealing member 8 preferably is torroidal O-ring with circular cross-section. However, annular sealing member may also have different forms and shapes as e.g. shown in the Figures, i.e. substantially rectangular with rounded corners or an oval shape.

The material of sealing member 8 is chosen such that the sealing member 8 has a sufficient sealing effect against the sealing surfaces, that it is sufficiently resiliently deformable to move from the static position to the dynamic position and back, and that friction is low during transition from the static to the dynamic position, i.e. during the start-up of shaft 10, when sealing member 8 still is in contact with the stator static sealing surface. Suitable materials for the sealing member 8 are e.g. rubber, Viton^{®}, FKM, FFKM, EPDM, etc. Suitable materials for the remaining elements of the sealing assembly 100 are for instance metallic materials such as bronze or stainless steel, and also elastomeric materials, especially for large shaft diameters, as well as synthetic materials such as acrylic plastic, PU or PA.

For large shaft diameters and thus for corresponding large shaft sealing assemblies, the elements of sealing assembly 100 may be manufactured as continuous elongated elements, which may be pre-assembled and fit around a shaft to a unit as shown in Fig. 1. Alternatively, the elements of sealing assembly 100 may be manufactured as partly assembled or as separate parts, which are to be assembled on site on the shaft. The rotor, stator and sealing member may be manufactured by extrusion and assembled on site by sealing together the extruded parts to annular elements on site. This has the advantage that sealing assemblies for large diameter shafts are easily manufactured and assembled on the shaft, both at low cost and by providing an effective sealing of the sealing assembly.

The embodiment shown in Figs. 1 to 4 has a recess 7, 31 enclosing a sealing member 8, 32 in each rotor 3, 6. In this way, the sealing works with pressure differences in both ways, i.e. either over-pressure outside or inside the housing. However, for certain applications it may be sufficient to ensure sealing into one pressure difference direction. In this case, one recess and sealing member may be omitted.

The embodiment according to Figs. 1 to 4 is preferably assembled to a complete cartridge, ready to fit into the space for the shaft sealing device.

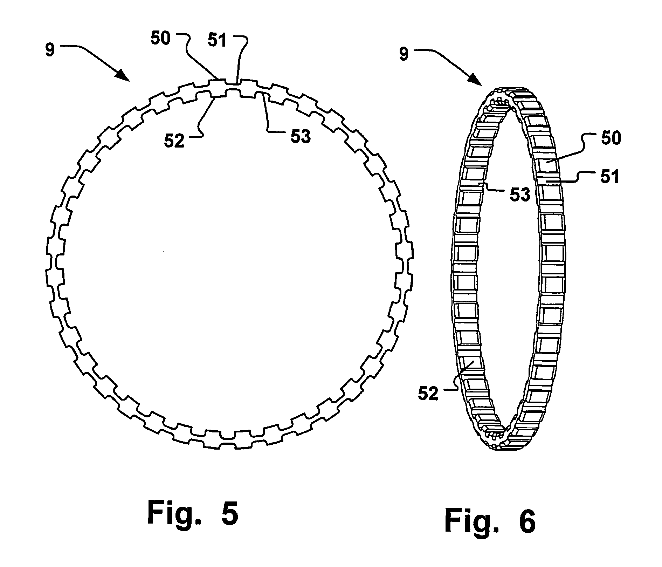

Now the attention is drawn to Fig. 5 and 6 in combination with the previous discussed figures. The sealing assembly 100 is assembled with the shaft 10 by means of slipping the sealing assembly over the shaft 10. A sealing member 11 seals the two sides of the sealing assembly, i.e. the gap between the shaft 10 and the expeller seal assembly 100. A problem associated with the previous is that the sealing assembly moves relative to the shaft due to inertia of two parts relative each other. This means that the sealing member 11 is subjected to frictional movement and wears out after a number of start-stop-cycles. This problem is solved by using a friction coupling member 9 inserted into a groove in parallel with the sealing member 11, as shown in the Figures. Another problem solved by the friction coupling member is that a much larger torque may be transmitted between the shaft 10 and the rotor member 3,6. Thus it is possible to transfer a much higher torque from the shaft 10 to the rotor members 3,6 than with only an O-ring sealing 11.

The friction coupling member 9 of the embodiment is shown in more detail in Figs. 5 and 6. According to the embodiment, the friction coupling member is an annular belt-like flattened ring having protrusions 50, 52 as well as recesses 51, 53 on both sides. Friction coupling ring 9 works as a breaking element in both rotational directions of shaft 10, breaking and stopping movement of assembly 100 relative to the shaft. The friction coupling works according to the principle that protrusions 51, 52 will tilt due to the small relative movement between the rotors 3,6 and the shaft 10. In case the friction coupling member 9 is manufactured from a resilient material, such as hard rubber, this tilting movement will compress the resilient material of the friction coupling at adjacent protrusions 50,52 of the friction coupling 9 and due to increased friction and increased local contact pressure at the contact surfaces of the friction coupling member to the shaft and the rotor member, the relative movement will be slowed down and stopped. Alternatively, the friction coupling member 9 is made of a little compressible material, such as metal, preferably stainless steel. In this case an even hard and more instantaneous break effect is achieved due to the choice of material and due to the fact that the coupling effect is achieved faster. Thus, independent of the material of the friction coupling member, a more intense connection of the shaft 10 and the rotor of the sealing assembly 100 is achieved in the currently discussed "break" position. The only way to loosen this coupling connection is to rotate the shaft in the reversed direction, so that the tilting is reversed. However, even in this direction, a tilting will occur in the other direction and the friction coupling 9 will hinder and stop relative movement. In case the friction member 9 is made of metal, a resilient spring effect may support the above described coupling process. The spring effect may be built into the friction coupling element by appropriately choosing a material and shape of the member 9, so that the spring effect is oriented against the relative movement between the shaft and the rotor member.

The torque actuating from the shaft on the rotor and vice versa may be increased by e.g. an increased pump effect of the expeller wings in order to withstand differential pressures as described above, or by an extra pump effect for e.g. an oil mister, as described below, integrated in to the sealing assembly 100. The higher the torque is, which actuates on the rotor member, the harder the elements of the friction coupling will be pressed together and the higher the wedge effect on the friction coupling. Thus torque is more effectively transmitted from the shaft to the rotor without degrading the of sealing member 11 in axial direction and with enhanced product life of the sealing member 11 and thus of the whole sealing device 100. However, the friction coupling does permit a certain movement, which might be desired for instance for the rotor to dynamically adjust to the position of the stator.

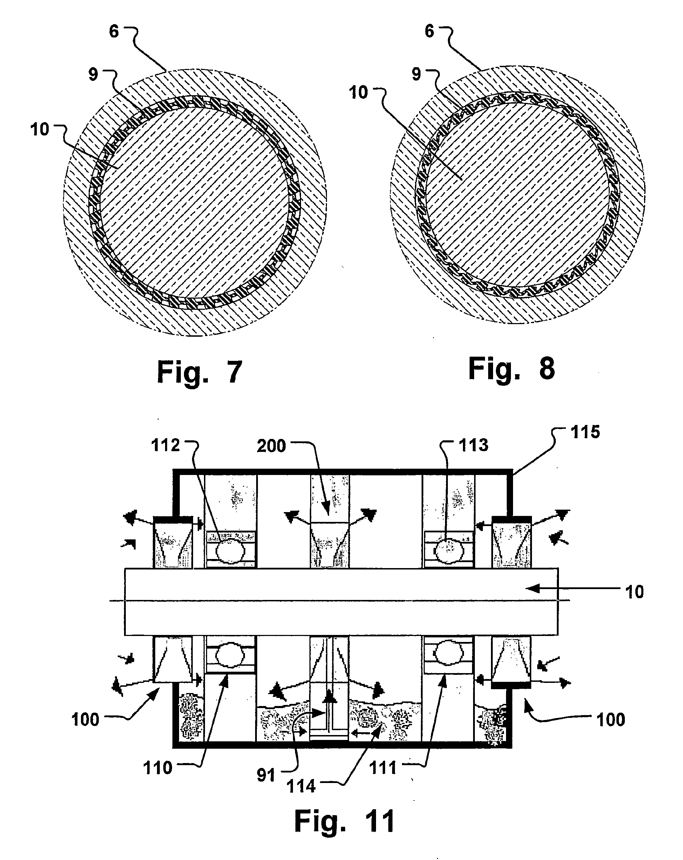

In Fig. 7 and Fig. 8 are given to illustrate the above described friction coupling function. A friction coupling member 9 is shown interposed between a shaft member 10 and a rotor member 6, wherein the friction coupling element is in rest, i.e. there is no differential torque between the shaft member 10 and the rotor member 6. in Fig. 8 the friction coupling element 9 is clamped up due to a differential torque between the shaft member 10 and the rotor member 6, as described above.

The person skilled in the art will understand that the shape of friction coupling member 9 shown in the figures is only one of several for achieving the above described effect. For instance the friction coupling member shown in Figs. 7 and 8 differs from the friction coupling member shown in Figs. 5 and 6, but fulfils the same function, as described above.

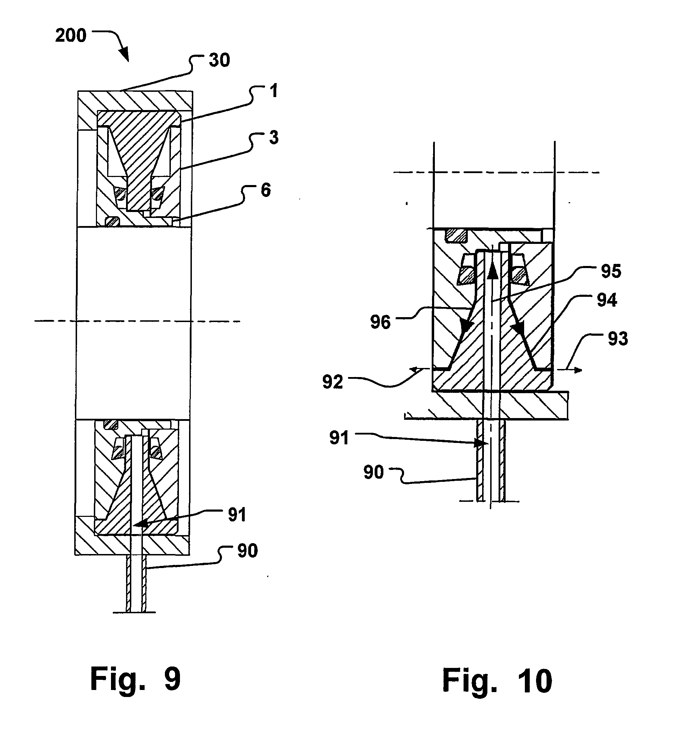

According to another embodiment 200 of the shaft sealing assembly is shown and illustrated in Fig. 9 and Fig. 10, wherein a radially-inwardly extending bore 91 is located at the bottom of the stator 1. The bore communicates with the interior of sealing assembly 100 and the interior of the housing 30. In the static operation mode, sealing member 8 acts as a non-return valve, opening in the dynamic operation mode. Figs. 9 and 10 show the dynamic operation mode, wherein the fluid channel 91 is open for fluid communication. In the embodiment shown, the channel 91 is connected to a fluid connector 90, which e.g. leads to a fluid reservoir (not shown). Alternatively the fluid channel 91 is in direct communication with the housing interior, in which a bearing is located. This might be the case, when the shaft sealing assembly 200 is built-in inside a housing, with e.g. two ball bearings on the two sides sealed off by shaft sealing assemblies 100, as illustrated in Fig. 11. In this case, e.g. the re-condensed oil mist is re-circulated through the fluid channel 91, minimising fluid consumption. Here, even a filter may be interposed into the channel in order to clean the recirculating liquid. During dynamic operation, a fluid is sucked through the bore 91 to the interior of sealing assembly 200 and expelled out of and away from the sealing assembly 200. This is detailed illustrated in connection with Fig. 10 and Fig. 11, wherein the arrows 92 to 96 indicate the fluid path in the exemplary embodiment. The arrows in Fig. 11 indicate partly an exterior pressure outside the bearing box 115, partly the expelled oil 114 from expeller members in assembly 200 and partly the oil flow through channel 91 into the interior of assembly 200, from where it is expelled out through the slit in assembly 200, similar to the slit explained above in connection with Fig. 1 to 4. Thus bearings 110, 111 having bearing balls 112, 113, are effectively lubricated on rotation of the shaft 10 by the generated oil mist. Furthermore the assembly is efficiently sealed against a pressure outside of bearing box 115 both with the shaft rotating, as shown in Fig. 11 and with the shaft at rest by static sealing members in assemblies 100.

In this way, an effective oil-mist generation is assured, without the need for expensive compressor systems generating the pressure needed for pressing the fluid through a channel and an ejector-nozzle. The necessary pressure is delivered by the integrated expeller rotor members 3,6 upon rotation.

The fluid may be a cleaning liquid cleaning away any material which might have accumulated in the grooves 5 of the expeller wheels 3,6. Alternatively, the fluid may be a lubrication liquid, such as oil, which is used for lubricating one or more bearings. In this case the oil is transformed into an oil mist by the centrifugal force throwing out small oil droplets from expeller wheels 3,6 to the exterior of sealing assembly 100. When the sealing assembly is used inside a housing having bearings on both sides of the sealing assembly, the assembly is used for spreading lubricating fluid to the bearings, thus enhancing the product life of the bearings. The liquid may come from a separate container (e.g. for cleaning fluid) or it may come from a fluid bath on the bottom of assembly 100. By using the bore, the spreading is much more effective than by just centrifugally throwing out a fluid in the case of the bottom of the expeller wheels immersed in a fluid bath.

Alternatively to the shown embodiment of the fluid channel, distributing liquid to both sides of the shaft sealing assembly 100, the fluid channel 91 may be arranged such that fluid is only distributed to the rotor member on one side of the shaft sealing. Thus fluid will only be distribute to this one side.

Manufacture of the sealing assembly 100 and its components is accomplished by known methods. The components are quickly and easily assembled.

Alternatively to the embodiment shown in the figures, the shaft sealing may be integrated directly with a bearing of the shaft. In this case the rotor is coupled to the inner bearing ring , such as a ball bearing, being coupled to the rotatable shaft. An expeller rotor member is directly joined to the inner bearing ring and a stator member is directly joined to the outer bearing housing. In this way a very compact solution is achieved.

In yet another alternative embodiment, the shaft sealing assembly comprises only one rotor member with a sealing member in a recess as previously described. In this case, the assembly does seal effectively for a differential pressure in one direction, which is sufficient for certain applications.

Also, the rotor members 6,3 shown as different constructed elements may be identical and attached to each other by e.g. gluing at the axial contact surfaces.

Applications and use of the above described shaft sealing according to the invention are various and include exemplary fields such as pumps such as in the offshore oil and gas industry, mining industry, pulp and paper industry, underwaterpumps, water driven turbines in hydro power plants, propeller shaft sealings of vessels, etc. The present invention has been described above with reference to specific embodiments. However, other embodiments than the above are equally possible within the scope of the appended claims, e.g. different shapes of the rotor or stator, other elastic materials for the sealing member than those described above, etc.

## Claims

1. A shaft sealing assembly (100) for static and dynamic axial sealing of a centrally located rotatingly movable shaft (10), comprising at least one first sealing member (8, 32) sealing said shaft (10), at least one rotor member (3, 6) attached to said shaft (10), and a stator member (1) attached to a housing (30),
said first sealing member (8, 32) being arranged in a recess (7, 31) in said rotor member (3, 6),
wherein the first sealing member (8, 32) is configured to move axially and radially away out of its static sealing position on rotation of the shaft (10),
**characterised in that**;
said first sealing member (8, 32) being adapted to maintain sealing performance of said sealing, during statical sealing, without degradation thereof, caused by a differential pressure present in axial direction between media on two sides of the shaft sealing assembly (100), said first sealing member (8, 32) being arranged to statically seal against a substantially radially oriented surface of the stator member (1), a substantially radially oriented surface (42) of said recess (7, 31) and a substantially axially oriented surface (43) of said recess (7),
and wherein dynamic sealing is achieved on rotation of said shaft (10) by said rotor member.

2. The shaft sealing assembly (100) according to claim 1, wherein said rotor member (3, 6) comprises at least one expeller rotor member (3, 6), being adapted to generate a pressure for dynamic sealing compensating said differential pressure, and being arranged adjacent to said stator member (1) to cause dynamic sealing on rotation of said shaft (10).

3. The shaft sealing assembly (100) according to claim 2, wherein said expeller rotor member (3, 6) has adjacent expeller protrusions (4) and expeller recesses (5) oriented towards said stator, for causing said dynamic sealing effect.

4. The shaft sealing assembly (100) according to any preceding claim, wherein said recess (7) is an annular recess (7, 31) in said rotor member (3, 6) and said first sealing member (8) is enclosed in said annular recess (7, 31) in said rotor member (6, 7), said recess (7, 31) being arranged to face said radial surface (45) of said stator member (1).

5. The shaft sealing assembly (100) according to claim 4, wherein said annular recess (7, 31) has a first substantially radially inclined annular recess surface (42) bridging a second substantially axially oriented radially inward positioned annular recess surface (43) and a third substantially axially inclined oriented radially outward positioned annular recess surface (44).

6. The shaft sealing assembly (100) according to claim 5, wherein said sealing member (8) for static sealing seals statically against said first substantially radially inclined annular recess surface (42), said second substantially axially oriented radially inward positioned annular recess surface (43) and said substantially radial stator surface (45), such that said differential pressure to cause a supporting sealing pressure of said sealing member (8) on said sealing surfaces.

7. The shaft sealing assembly (100) according to any preceding claim, wherein said sealing member (8) is made of a resilient elastically deformable material.

8. The shaft sealing assembly (100) according to any preceding claim, wherein said shaft sealing assembly (100) is arranged to seal a bearing.

9. The shaft sealing assembly (100) according to claim 8, wherein said shaft sealing assembly (100) is integrated with said bearing.

10. The shaft sealing assembly (100) according to any preceding claim, wherein said rotor member (6) is equipped with a friction coupling member (9) interlockingly arranged between said shaft (10) and said rotor member (6).

11. The shaft sealing assembly (100) according to claim 10, wherein said rotor member comprises an annular radial recess substantially housing said friction coupling member (9).

12. The shaft sealing assembly (100) according to claim 10 or 11, wherein said friction coupling member (9) is arranged such that a torque causing relative rotational movement between said shaft (10) and said rotor member (6) causes compression of said friction coupling member (9) and increased friction between the shaft (10) and the rotor (6), such that braking is achieved on said relative rotational movement.

13. The shaft sealing assembly (100) according to claims 10 to 12, wherein said friction coupling member (9) has an annular ring shape, adjacent protrusions (50, 52) and recesses (51, 53).

14. The shaft sealing assembly (100) according to any preceding claim, wherein a radially-inward channel (91) extends for fluid communication from the bottom of said stator (1), said channel (91) being in communication with the interior of the sealing assembly (100) and the interior of the housing (30).

15. The shaft sealing assembly (100) according to claim 14, wherein said channel (91) is adapted to transport a fluid, such that expelling of said fluid out and away from said expeller rotor member (3, 6) is achieved on rotation of said shaft (10).

16. The shaft sealing assembly (100) according to claim 15, wherein said fluid is a cleaning fluid expelling material accumulated during static sealing in said expeller recesses (5) from the sealing assembly (100) on rotation of said shaft (1).

17. The shaft sealing assembly (100) according to claim 15, wherein said fluid is a lubricant fluid.

18. The shaft sealing assembly (100) according to claim 17, wherein said lubricant fluid is oil, said oil being converted to oil mist when expelled from the sealing assembly.

19. The shaft sealing assembly (100) according to any preceding claim, wherein the shaft has a diameter of up to 3 m.

20. The shaft sealing assembly (100) according to any preceding claim, wherein said rotor members (3, 6), stator member (1) and sealing member (8) are manufactured of an elastomeric material by extrusion.

21. A method of sealing a shaft statically and dynamically by means of a shaft sealing assembly according to claim 1, **characterised by**
supporting said statical sealing by a differential pressure present in axial direction between media on two sides of said shaft, by
pushing a first sealing member (8) arranged in the rotor member (3) against a substantially radially oriented surface of the stator member (1), a substantially radially oriented surface (42) of a recess (7) housing said sealing member (8) and a substantially axially oriented surface (43) of said recess (7), and
centrifugally moving the static sealing member (8) on rotation of the shaft (10) axially and radially away out of its static sealing position.

22. A method according to claim 21, **characterised in that** said centrifugally moving of the static sealing member (8) on rotation of the shaft (10) axially and radially away out of its static sealing position is eliminating friction between the sealing member (8) and the stator (1) during dynamic sealing.

23. A method according to claim 22, **characterised by** effecting said dynamic sealing by a dynamic rotor pressure difference caused by a turbine effect of the rotor member (3, 6), and
compensating said differential pressure present in axial direction between media on two sides of said shaft with said dynamic rotor pressure difference, thereby
maintaining sealing during dynamic operation.

## Patentansprüche

1. Wellendichtungsanordnung (100) zum statischen und dynamischen axialen Abdichten einer zentral angeordneten, drehbar beweglichen Welle (10), die mindestens ein erstes, die Welle (10) abdichtendes Dichtungselement (8, 32), mindestens ein an der Welle (10) befestigtes Rotorelement (3, 6) sowie ein an einem Gehäuse (30) befestigtes Statorelement (1) umfasst,
wobei das erste Dichtungselement (8, 32) in einer Aussparung (7, 31) in dem Rotorelement (3, 6) angeordnet ist,
wobei das erste Dichtungselement (8, 32) so gestaltet ist, dass es sich bei einer Drehung der Welle (10) axial und radial aus seiner statischen Dichtungsposition weg bewegt,
**dadurch gekennzeichnet, dass**
das erste Dichtungselement (8, 32) dafür geeignet ist, die Dichtungsleistung der Dichtung während der statischen Abdichtung aufrechtzuerhalten, ohne dass diese sich aufgrund eines Differenzdrucks verschlechtert, der in axialer Richtung zwischen Medien auf zwei Seiten der Wellendichtungsanordnung (100) vorhanden ist, wobei das erste Dichtungselement (8, 32) so angeordnet ist, dass es statisch gegen eine im Wesentlichen radial ausgerichtete Oberfläche des Statorelements (1), eine im Wesentlichen radial ausgerichtete Oberfläche (42) der Aussparung (7, 31) und eine im Wesentlichen axial ausgerichtete Oberfläche (43) der Aussparung (7) abdichtet,
und wobei die dynamische Abdichtung bei Drehung der Welle (10) durch das Rotorelement erreicht wird.

2. Wellendichtungsanordnung (100) nach Anspruch 1, wobei das Rotorelement (3, 6) mindestens ein Gegenläufer-Rotorelement (3, 6) umfasst, dass dafür geeignet ist, einen Druck zum dynamischen Abdichten zu erzeugen, der den Differenzdruck ausgleicht, und dem Statorelement (1) benachbart angeordnet ist, um bei einer Drehung der Welle (10) eine dynamische Abdichtung zu bewirken.

3. Wellendichtungsanordnung (100) nach Anspruch 2, wobei das Gegenläufer-Rotorelement (3, 6) einander benachbarte Gegenläufer-Vorsprünge (4) und Gegenläufer-Aussparungen (5) aufweist, die zu dem Stator hin ausgerichtet sind, um den dynamischen Abdichtungseffekt zu bewirken.

4. Wellendichtungsanordnung (100) nach einem der vorangehenden Ansprüche, wobei die Aussparung (7) eine ringförmige Aussparung (7, 31) in dem Rotorelement (3, 6) ist und das erste Dichtungselement (8) in der ringförmigen Aussparung (7, 31) in dem Rotorelement (6, 7) umschlossen ist, wobei die Aussparung (7, 31) so angeordnet ist, dass sie der radialen Oberfläche (45) des Statorelements (1) zugewandt ist.

5. Wellendichtungsanordnung (100) nach Anspruch 4, wobei die ringförmige Aussparung (7, 31) eine erste im Wesentlichen radial geneigte Oberfläche (42) der ringförmigen Aussparung aufweist, die einen Zwischenraum zwischen einer zweiten im Wesentlichen axial ausgerichteten radial einwärts angeordneten Oberfläche (43) der ringförmigen Aussparung und einer dritten im Wesentlichen axial geneigt ausgerichteten, radial auswärts angeordneten Oberfläche (44) der ringförmigen Aussparung überbrückt.

6. Wellendichtungsanordnung (100) nach Anspruch 5, wobei das Dichtungselement (8) zur statischen Abdichtung statisch gegen die erste im Wesentlichen radial geneigte Oberfläche (42) der ringförmigen Aussparung, die zweite im Wesentlichen axial ausgerichtete, radial einwärts angeordnete Oberfläche (43) der ringförmigen Aussparung und die im Wesentlichen radiale Statoroberfläche (45) abdichtet, so dass der Differenzdruck einen unterstützenden Abdichtungsdruck des Dichtungselements (8) auf die Dichtungsoberflächen bewirkt.

7. Wellendichtungsanordnung (100) nach einem der vorangehenden Ansprüche, wobei das Dichtungselement (8) aus einem nachgiebigen, elastisch verformbaren Material besteht.

8. Wellendichtungsanordnung (100) nach einem der vorangehenden Ansprüche, wobei die Wellendichtungsanordnung (100) so angeordnet ist, dass sie ein Lager abdichtet.

9. Wellendichtungsanordnung (100) nach Anspruch 8, wobei die Wellendichtungsanordnung (100) in das Lager integriert ist.

10. Wellendichtungsanordnung (100) nach einem der vorangehenden Ansprüche, wobei das Rotorelement (6) mit einem Reibungskopplungselement (9) ausgestattet ist, das zwischen der Welle (10) und dem Rotorelement (6) koppelnd angeordnet ist.

11. Wellendichtungsanordnung (100) nach Anspruch 10, wobei das Rotorelement eine ringförmige radiale Aussparung umfasst, in der das Reibungskopplungselement (9) im Wesentlichen untergebracht ist.

12. Wellendichtungsanordnung (100) nach Anspruch 10 oder 11, wobei das Reibungskopplungselement (9) so angeordnet ist, dass ein Drehmoment, das eine relative Drehbewegung zwischen der Welle (10) und dem Rotorelement (6) bewirkt, eine Kompression des Reibungskopplungselements (9) und erhöhte Reibung zwischen der Welle (10) und dem Rotor (6) bewirkt, so dass bei der relativen Drehbewegung eine Bremswirkung erzielt wird.

13. Wellendichtungsanordnung (100) nach Anspruch 10 bis 12, wobei das Reibungskopplungselement (9) eine ringförmige Form, einander benachbarte Vorsprünge (50, 52) und Aussparungen (51, 53) aufweist.

14. Wellendichtungsanordnung (100) nach einem der vorangehenden Ansprüche, wobei sich ein radial einwärts liegender Kanal (91) zwecks Strömungsverbindung vom unteren Ende des Stators (1) erstreckt, wobei der Kanal (91) mit dem Inneren der Dichtungsanordnung (100) und dem Inneren des Gehäuses (30) in Verbindung steht.

15. Wellendichtungsanordnung (100) nach Anspruch 14, wobei der Kanal (91) dafür geeignet ist, ein Fluid zu transportieren, so dass das Entfernen des Fluids aus dem Gegenläufer-Rotorelement (3, 6) und von diesem weg bei der Drehung der Welle (10) erreicht wird.

16. Wellendichtungsanordnung (100) nach Anspruch 15, wobei das Fluid ein Reinigungsfluid ist, das bei einer Drehung der Welle (1) Material aus der Dichtungsanordnung (100) entfernt, das sich während der statischen Abdichtung in den Gegenläufer-Aussparungen (5) angesammelt hat.

17. Wellendichtungsanordnung (100) nach Anspruch 15, wobei das Fluid eine Schmierflüssigkeit ist.

18. Wellendichtungsanordnung (100) nach Anspruch 17, wobei die Schmierflüssigkeit Öl ist, wobei das Öl in Ölnebel umgewandelt wird, wenn es aus der Dichtungsanordnung entfernt wird.

19. Wellendichtungsanordnung (100) nach einem der vorangehenden Ansprüche, wobei die Welle einen Durchmesser von bis zu 3 m hat.

20. Wellendichtungsanordnung (100) nach einem der vorangehenden Ansprüche, wobei die Rotorelemente (3, 6), das Statorelement (1) und das Dichtungselement (8) mithilfe von Extrusion aus einem elastomeren Material hergestellt werden.

21. Verfahren zum statischen und dynamischen Abdichten einer Welle mithilfe einer Wellendichtungsanordnung nach Anspruch 1, **gekennzeichnet durch**
Unterstützen der statischen Abdichtung **durch** einen Differenzdruck, der in axialer Richtung zwischen Medien auf zwei Seiten der Welle vorhanden ist, **durch**
Drücken eines ersten Dichtungselements (8), das in dem Rotorelement (3) angeordnet ist, gegen eine im Wesentlichen radial ausgerichtete Oberfläche des Statorelements (1), eine im Wesentlichen radial ausgerichtete Oberfläche (42) einer Aussparung (7), in der das Dichtungselement (8) untergebracht ist, und eine im Wesentlichen axial ausgerichtete Oberfläche (43) der Aussparung (7) und
zentrifugales Bewegen des statischen Dichtungselements (8) bei der Drehung der Welle (10) axial und radial weg aus seiner statischen Dichtungsposition.

22. Verfahren nach Anspruch 21, **dadurch gekennzeichnet, dass** das zentrifugale Bewegen des statischen Dichtungselements (8) bei der Drehung der Welle (10) axial und radial weg aus seiner statischen Dichtungsposition die Reibung zwischen dem Dichtungselement (8) und dem Stator (1) während der dynamischen Abdichtung beseitigt.

23. Verfahren nach Anspruch 22, **gekennzeichnet durch** Bewirken der dynamischen Abdichtung **durch** eine dynamische Rotor-Druckdifferenz, die **durch** eine Turbinenwirkung des Rotorelements (3, 6) bewirkt wird, und
Ausgleichen des Differenzdrucks, der in axialer Richtung zwischen Medien auf zwei Seiten der Welle vorhanden ist, mithilfe der dynamischen Rotor-Druckdifferenz, wodurch
die Abdichtung während des dynamischen Betriebs aufrechterhalten wird.

## Revendications

1. Ensemble d'étanchéité d'arbre (100) destiné à une étanchéité axiale statique et dynamique d'un arbre rotatif localisé de manière centrale (10), comprenant au moins un premier élément d'étanchéité (8, 32) étanchéifiant ledit arbre (10), au moins un élément de rotor (3, 6) fixé audit arbre (10), et un élément de stator (1) fixé à un logement (30),
ledit premier élément d'étanchéité (8, 32) étant agencé dans un évidement (7, 31) dans ledit élément de rotor (3, 6),
dans lequel le premier élément d'étanchéité (8, 32) est configuré pour se déplacer de manière axiale et s'écarter de manière radiale de sa position d'étanchéité statique lors d'une rotation de l'arbre (10),
**caractérisé en ce que** ;
ledit premier élément d'étanchéité (8, 32) étant conçu pour maintenir les performances d'étanchéité de ladite étanchéité, au cours de l'étanchéité statique, sans dégradation de cette dernière, provoquée par une pression différentielle présente dans une direction axiale entre des milieux des deux côtés de l'ensemble d'étanchéité d'arbre (100), ledit premier élément d'étanchéité (8, 32) étant agencé pour étanchéifier de manière statique une surface sensiblement orientée de manière radiale de l'élément de stator (1), une surface sensiblement orientée de manière radiale (42) dudit évidement (7, 31) et une surface sensiblement orientée de manière axiale (43) dudit évidemment (7),
et où une étanchéité dynamique est atteinte lors d'une rotation dudit arbre (10) par l'intermédiaire dudit élément de rotor.

2. Ensemble d'étanchéité d'arbre (100) selon la revendication 1, dans lequel ledit élément de rotor (3, 6) comprend au moins un élément de rotor expulseur (3, 6) qui est conçu pour générer une pression pour une étanchéité dynamique, compensant ladite pression différentielle, et qui est agencé de manière adjacente audit élément de stator (1) pour provoquer une étanchéité dynamique lors de la rotation dudit arbre (10).

3. Ensemble d'étanchéité d'arbre (100) selon la revendication 2, dans lequel ledit élément de rotor expulseur (3, 6) présente des protubérances d'expulseur adjacentes (4) et des évidements d'expulseur (5) orientés vers ledit stator, afin de provoquer ledit effet d'étanchéité dynamique.

4. Ensemble d'étanchéité d'arbre (100) selon l'une quelconque des revendications précédentes, dans lequel ledit évidemment (7) est un évidement annulaire (7, 31) dans ledit élément de rotor (3, 6) et ledit premier élément d'étanchéité (8) est enfermé dans ledit évidement annulaire (7, 31) dans ledit élément de rotor (6, 7), ledit évidement (7, 31) étant agencé pour faire face à ladite surface radiale (45) dudit élément de stator (1).

5. Ensemble d'étanchéité d'arbre (100) selon la revendication 4, dans lequel ledit évidement annulaire (7, 31) présente une première surface d'évidement annulaire sensiblement inclinée de manière radiale (42) reliant une deuxième surface d'évidement annulaire sensiblement positionnée de manière radiale vers l'intérieur et orientée de manière axiale (43) et une troisième surface d'évidement annulaire sensiblement positionnée de manière radiale vers l'extérieur et inclinée et orientée de manière axiale (44).

6. Ensemble d'étanchéité d'arbre (100) selon la revendication 5, dans lequel ledit élément d'étanchéité (8) pour une étanchéité statique étanchéifie de manière statique ladite première surface d'évidement annulaire sensiblement inclinée de manière radiale (42), ladite deuxième surface d'évidement annulaire sensiblement positionnée de manière radiale vers l'intérieur et orientée de manière axiale (43) et ladite surface de stator sensiblement radiale (45), de sorte à avoir ladite pression différentielle pour provoquer une pression d'étanchéité de support dudit élément d'étanchéité (8) sur lesdites surfaces d'étanchéité.

7. Ensemble d'étanchéité d'arbre (100) selon l'une quelconque des revendications précédentes, dans lequel ledit élément d'étanchéité (8) est constitué d'un matériau déformable élastiquement résilient.

8. Ensemble d'étanchéité d'arbre (100) selon l'une quelconque des revendications précédentes, où ledit ensemble d'étanchéité d'arbre (100) est agencé pour étanchéifier un palier.

9. Ensemble d'étanchéité d'arbre (100) selon la revendication 8, où ledit ensemble d'étanchéité d'arbre (100) est intégré audit palier.

10. Ensemble d'étanchéité d'arbre (100) selon l'une quelconque des revendications précédentes, dans lequel ledit élément de rotor (6) est équipé d'un élément de couplage à frottement (9) agencé en verrouillage mutuel entre ledit arbre (10) et ledit élément de rotor (6).

11. Ensemble d'étanchéité d'arbre (100) selon la revendication 10, dans lequel ledit élément de rotor comprend un évidement radial annulaire logeant globalement ledit élément de couplage à frottement (9).

12. Ensemble d'étanchéité d'arbre (100) selon la revendication 10 ou 11, dans lequel ledit élément de couplage à frottement (9) est agencé de telle sorte qu'un couple provoquant un mouvement de rotation relative entre ledit arbre (10) et ledit élément de rotor (6) provoque une compression dudit élément de couplage à frottement (9) et un frottement accru entre l'arbre (10) et le rotor (6), de telle sorte qu'un freinage est atteint sur ledit mouvement de rotation relative.

13. Ensemble d'étanchéité d'arbre (100) selon les revendications 10 à 12, dans lequel ledit élément de couplage à frottement (9) présente une forme de bague annulaire, des protubérances adjacentes (50, 52) et des évidements (51, 53).

14. Ensemble d'étanchéité d'arbre (100) selon l'une quelconque des revendications précédentes, dans lequel un canal radialement vers l'intérieur (91) s'étend pour une communication de fluide depuis la partie inférieure dudit stator (1), ledit canal (91) étant en communication avec l'intérieur de l'ensemble d'étanchéité (100) et l'intérieur du logement (30).

15. Ensemble d'étanchéité d'arbre (100) selon la revendication 14, dans lequel ledit canal (91) est conçu pour transporter un fluide, de telle sorte que l'expulsion dudit fluide à l'extérieur en s'écartant dudit élément de rotor expulseur (3, 6) est atteinte lors d'une rotation dudit arbre (10).

16. Ensemble d'étanchéité d'arbre (100) selon la revendication 15, dans lequel ledit fluide est un fluide de nettoyage expulsant un matériau accumulé au cours d'une étanchéité statique dans lesdits évidements d'expulseur (5) hors de l'ensemble d'étanchéité (100) lors d'une rotation dudit arbre (1).

17. Ensemble d'étanchéité d'arbre (100) selon la revendication 15, dans lequel ledit fluide est un fluide lubrifiant.

18. Ensemble d'étanchéité d'arbre (100) selon la revendication 17, dans lequel ledit fluide lubrifiant est de l'huile, ladite huile étant convertie en brouillard d'huile lors de l'expulsion depuis l'ensemble d'étanchéité.

19. Ensemble d'étanchéité d'arbre (100) selon l'une quelconque des revendications précédentes, dans lequel l' arbre présente un diamètre allant jusqu'à 3 m.

20. Ensemble d'étanchéité d'arbre (100) selon l'une quelconque des revendications précédentes, dans lequel lesdits éléments de rotor (3, 6), élément de stator (1) et élément d'étanchéité (8) sont fabriqués à partir d'un matériau élastomère par extrusion.

21. Procédé d'étanchéification d'un arbre de manière statique et dynamique au moyen d'un ensemble d'étanchéité d'arbre selon la revendication 1, **caractérisé par**
un support de ladite étanchéité statique par une pression différentielle présente dans une direction axiale entre des milieux des deux côtés dudit arbre, par
le fait de pousser un premier élément d'étanchéité (8) agencé dans l'élément de rotor (3) contre une surface sensiblement orientée de manière radiale de l'élément de stator (1), une surface sensiblement orientée de manière radiale (42) d'un évidement (7) logeant ledit élément d'étanchéité (8) et une surface sensiblement orientée de manière axiale (43) dudit évidement (7), et
un déplacement de manière centrifuge de l'élément d'étanchéité statique (8) lors d'une rotation de l'arbre (10) afin de l'écarter de manière axiale et radiale de sa position d'étanchéité statique.

22. Procédé selon la revendication 21, **caractérisé en ce que** ledit déplacement de manière centrifuge de l'élément d'étanchéité statique (8) lors d'une rotation de l'arbre (10) afin de l'écarter de manière axiale et radiale de sa position d'étanchéité statique élimine les frottements entre l'élément d'étanchéité (8) et le stator (1) au cours d'une étanchéité dynamique.

23. Procédé selon la revendication 22, **caractérisé par** le fait d'effectuer ladite étanchéité dynamique par l'intermédiaire d'une différence de pression de rotor dynamique provoquée par un effet de turbine de l'élément de rotor (3, 6) et,
une compensation de ladite pression différentielle présente dans une direction axiale entre des milieux des deux côtés dudit arbre avec ladite différence de pression de rotor dynamique, permettant de cette manière
un maintien de l'étanchéité au cours d'un fonctionnement dynamique.
